# EUROPÄISCHE PATENTSCHRIFT

(11) **EP 1 923 158 B1**
(45) Veröffentlichungstag und Bekanntmachung des Hinweises auf die Patenterteilung: **25.02.2015**
(21) Anmeldenummer: 07021804.5
(22) Anmeldetag: 09.11.2007
(51) Int. Cl.: B23B 51/02, E21B 10/58, B28D 1/14

(54) **Bohrwerkzeug mit Hartstoffeinsatz**
Drill tool with hard material insert
Outil de perçage avec insert en matériau dur

(30) Priorität: 17.11.2006 DE 102006035452
(43) Veröffentlichungstag der Anmeldung: 21.05.2008
(73) Patentinhaber: HILTI Aktiengesellschaft, 9494 Schaan (LI)
(72) Erfinder: Koch, Olaf, Kaufering 86916 (DE); Hofmann, Karl-Heinz, 86947 Weil (DE)
(74) Vertreter: Hilti Aktiengesellschaft Corporate Intellectual Property

(56) Entgegenhaltungen:
- EP-A1- 1 273 372
- DE-A1- 10 116 397
- DE-A1- 19 605 157
- US-A- 4 984 944
- US-B1- 6 270 297

## Beschreibung

Die Erfindung bezeichnet ein Bohrwerkzeug mit einem Hartstoffeinsatz, insbesondere einen Schlagbohrmeissel für Gestein und Beton zur Verwendung mit einer Handwerkzeugmaschine, nach dem Oberbegriff von Anspruch 1 und wie aus der EP 1273372 A1 bekannt.

Üblicherweise weisen derartige Bohrwerkzeuge einen sich axial zu einer Drehachse erstreckenden wendelförmigen Schaft auf, an dessen maschinenseitigem Schaftende ein Einsteckende zur Aufnahme in der Handwerkzeugmaschine und am gegenüberliegenden, werkstückseitigen Schaftende ein meisselförmiger Hartstoffeinsatz angeordnet ist. Der Hartstoffeinsatz ist zumeist entweder in einen sich durch das Schaftende erstreckenden Aufnahmeschlitz hart eingelötet, stumpf am Stirnende des Schaftes hart aufgelötet oder angeschweist.

Nach der US4984944 sind bei einem Bohrwerkzeug mit einem plattenförmigen Hartstoffeinsatz an den drehrichtungsseitigen Seitenflächen mehrere prismenförmige bzw. quaderförmige Ausnehmungen vorhanden, die axial orientiert sind und welche die direkt an der Seitenfläche verlaufende, sich radial erstreckende Schneidkante asymmetrisch versetzt unterbrechen, wodurch in der ansonsten ebenen, tangential geneigten Freifläche dort radial lokal zusätzliche Schneidkanten ausgebildet werden, die tangential versetzt sind. Eine radial lokale Vergrösserung des Freiwinkels erfolgt mit dieser Lösung nicht.

Nach der US6446741 sind bei einem Bohrwerkzeug mit einem plattenförmigen Hartstoffeinsatz mit einer, zwischen je einer tangential drehrichtungsseitig geneigten Spanfläche und einer gegenüberliegenden Freifläche dachkantenförmig ausgebildeten, sich radial erstreckende Schneidkante, innerhalb der Freiflächen mehrere radial lokal asymmetrisch versetzte kalottenförmige Ausnehmungen vorhanden, die entweder von der Schneidkante beabstandet sind oder sich direkt bis zur Schneidkante erstrecken. Bei der letzten Alternative wird der Freiwinkel radial lokal vergrössert. Doch der bei zweckentsprechender Nutzung auftretende Verschleiss des Hartstoffeinsatzes bewirkt, bedingt durch die kalottenförmige Form der konkaven Ausnehmungen, einen über die Nutzungsdauer stark variierenden radial lokalen Freiwinkel und dadurch eine unterschiedliche Bohrgeschwindigkeit, welche den Nutzer über die reale Restnutzungsdauer des Bohrwerkzeuges verwirrt.

Somit besteht die Aufgabe der Erfindung in der Realisierung eines Bohrwerkzeuges mit über der Nutzungsdauer im Wesentlichen gleicher Bohrgeschwindigkeit.

Die Aufgabe wird im Wesentlichen durch die Merkmale des Anspruchs 1 gelöst. Vorteilhafte Weiterbildungen ergeben sich aus den Unteransprüchen.

So weist ein um eine Drehachse zumindest teilweise drehend antreibbares Bohrwerkzeug einen wendelförmigen Schaft auf, an dessen axialem Schaftende ein Hartstoffeinsatz stoffschlüssig befestigt ist, welcher zumindest eine sich radial erstreckende Schneidkante aufweist, die an zumindest eine tangential geneigte Spanfläche angrenzt, welche zumindest eine konkave Ausnehmung mit einer sich längs der Schneidkante erstreckenden Breite und einer dazu senkrechten Länge innerhalb der Spanfläche sowie einer zu dieser senkrechten Tiefe aufweist, wobei ausgehend von der Schneidkante die Tiefe linear zur Länge zunimmt, wobei die Schneidkante durchgehend geradlinig ist.

Durch die linear zur Länge zunehmende Tiefe der konkaven Ausnehmung (welche somit zumindest stückweise eben ist) bleibt ein durch diese Ausnehmungen tangential lokal vergrösserter Spanwinkel auch bei verschleissbedingter Abnutzung des Hartstoffeinsatzes konstant, wodurch über die Nutzungsdauer (bestimmt durch den Verschleiss der Länge der Ausnehmung) die Bohrgeschwindigkeit zumindest gleichmässiger als bei sich mit der Nutzungsdauer änderndem Freiwinkel ist.

Vorteilhaft liegt der, die mit einem tangentialen Spanwinkel tangential geneigte Spanfläche innerhalb der radial lokalen Ausnehmung zusätzlich versteilernde, Ausnehmungsspanwinkel im Bereich von 5° bis 15°, weiter vorteilhaft bei 10°, wodurch innerhalb der Nutzungsdauer die Bohrgeschwindigkeit geeignet erhöht wird, ohne durch einen einheitlich vergrösserten Spanwinkel die Robustheit des Hartstoffeinsatzes gegen Armierungseisentreffer zu schwächen.

Vorteilhaft ist die konkave Ausnehmung in ihrer Breite verschleissseitig linear erweitert, wodurch bezüglich der Schneidkante der Anteil der radial lokal vergrösserten Spanwinkel bei verschleissbedingter Abnutzung des Hartstoffeinsatzes leicht anwächst, wodurch die bei verschleissbedingter Abnutzung des Hartstoffeinsatzes eintretende Abstumpfung der restlichen Schneidkante kompensiert wird.

Vorteilhaft liegt die Verbreiterung der Breite zwischen der Hälfte und dem Doppelten der Länge, wodurch die Verschlechterung der Bohrgeschwindigkeit innerhalb der Nutzungsdauer geeignet kompensiert ist.

Vorteilhaft sind an der ersten Spanfläche eine gerade Anzahl und an der zweiten Spanfläche eine ungerade Anzahl von Ausnehmungen asymmetrisch radial ineinander versetzt angeordnet, wodurch sich deren Schneidspuren beim Drehen um die Drehachse konzentrisch ineinander verschachteln.

Vorteilhaft beträgt die Breitensumme der Breiten aller Ausnehmungen mindestens 40% des Hüllkreisdurchmessers des Hartstoffeinsatzes, wodurch beim Drehen um die Drehachse mindestens 80% des Hüllkreisdurchmessers den vergrösserten Spanwinkel aufweisen und somit die Bohrgeschwindigkeit wesentlich steigerbar ist.

Vorteilhaft ist innerhalb der Ausnehmung zumindest eine längs der Länge verlaufende Verstärkungsrippe vorhanden, wodurch innerhalb der radial lokal angeordneten Ausnehmung eine sublokale Verstärkung erfolgt, welche die Robustheit des Hartstoffeinsatzes gegen Armierungseisentreffer zusätzlich erhöht.

Vorteilhaft ist die Verstärkungsrippe in ihrer Höhe (entgegengesetzt zur Tiefe der Ausnehmung orientiert) linear zur Länge verstärkt, wodurch ein durch diese Verstärkungsrippe radial sublokal ausgebildeter, die mit einem Ausnehmungsspanwinkel schräge Ausnehmung innerhalb der Verstärkungsrippe wieder abflachende, Rippenerhöhungswinkel auch bei verschleissbedingter Abnutzung des Hartstoffeinsatzes konstant bleibt.

Vorteilhaft liegt der Rippenerhöhungswinkel im Bereich von 2° bis 7°, weiter vorteilhaft bei 5°, wodurch die Stabilität des Hartstoffeinsatzes im lokal radialen Bereich der Ausnehmung geeignet erhöht wird.

Vorteilhaft ist die Verstärkungsrippe (in Projektion auf die Spanfläche) viereckig, weiter vorteilhaft trapezförmig mit verschleissseitig schräg verlaufenden Seiten ausgebildet, wodurch beim maschinenseitig axialen Rückprall des Bohrwerkzeuges dem abrasiv abgetragenen Bohrklein eine maschinenseitige Stossimpulskomponente aufgeprägt wird, welche den Abtransport des Bohrkleins zum wendelförmigen Schaft unterstützt.

Die Erfindung wird bezüglich eines vorteilhaften Ausführungsbeispiels näher erläutert mit:
Fig. 1a, 1b als Bohrwerkzeug in Seitenansicht und Aufsicht
Fig. 2 als Einzelheit in tangentialer Ansicht in Drehrichtung
Fig. 3 als Variante der Einzelheit
Fig. 4 als Radialschnitt der Einzelheit (Linie IV - IV in Fig. 3)

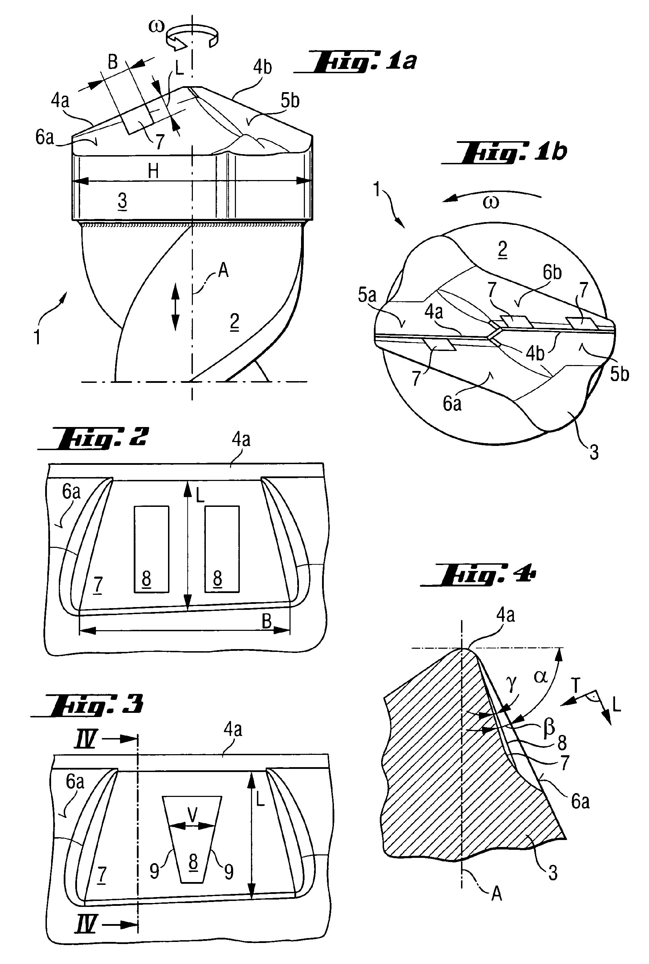

Nach Fig. 1a, 1b weist ein nur teilweise dargestelltes, längs einer Drehachse A schlagendes und in einer Drehrichtung [omega] drehendes, Bohrwerkzeug 1 einen wendelförmigen Schaft 2 auf, an dessen werkstückseitiger Stirnfläche des Schaftendes ein kompakter Hartstoffeinsatz 3 stumpf hart aufgelötet ist, welcher zwei sich radial erstreckende Schneidkanten 4a, 4b aufweist, die dachkantenförmig zwischen je einer tangential schrägen drehrichtungsseitigen Spanfläche 5a, 5b und einer gegenüberliegenden Spanfläche 6a, 6b ausgebildet ist. Die Spanfläche 6a weist radial lokal genau eine konkave Ausnehmung 7 und die Spanfläche 6b genau zwei konkave Ausnehmungen 7 auf, welche zueinander asymmetrisch radial versetzt angeordnet sind. Die Breitensumme der Breiten B aller drei Ausnehmungen 7 beträgt 40% des Hüllkreisdurchmessers H des Hartstoffeinsatzes 3. Die Ausnehmung 7 weist eine Länge L und eine Breite B innerhalb der Ebene der Spanfläche 6a auf.

Nach Fig. 2 ist die Ausnehmung 7 in ihrer Breite B linear zur Länge L verbreitert, wobei die radial beidseitig gleichmässig verteilte Verbreiterung der Breite B betragsmässig der Hälfte der Länge L entspricht. Sublokal innerhalb der Ausnehmung 7 sind genau zwei rechteckige (in Projektion auf die Ebene der Spanfläche 6a), längs der Länge L verlaufende Verstärkungsrippen 8 vorhanden.

Nach Fig. 3 ist alternativ genau eine Verstärkungsrippe 8 vorhanden, die trapezförmig (in Projektion auf die Ebene der Spanfläche 6a) mit längs der Länge L abnehmender Verstärkungsbreite V und schräg verlaufenden Seiten 9 ausgebildet ist.

Nach Fig. 4 vertieft sich die Ausnehmung 7 in ihrer Tiefe T bezüglich der Spanfläche 6a ausgehend von der Schneidkante 4a längs der Länge L linear. Dabei liegt der Ausnehmungsspanwinkel [beta], der die mit einem Spanwinkel [alpha] tangential geneigte Spanfläche 6a innerhalb der radial lokalen Ausnehmung 7 zusätzlich versteilert, bei 10°. Die innerhalb der Ausnehmung 7 vorhandene Verstärkungsrippe 8 wird ausgehend von der Schneidkante 4a längs der Länge L linear höher, wobei deren Rippenerhöhungswinkel [gamma] bei 5° liegt.

## Patentansprüche

1. Um eine Drehachse (A) zumindest teilweise drehend antreibbares Bohrwerkzeug (1) mit einem wendelförmigen Schaft (2), an dessen axialem Schaftende ein Hartstoffeinsatz (3) stoffschlüssig befestigt ist, welcher zumindest eine sich radial erstreckende Schneidkante (4a, 4b) aufweist, die an zumindest eine tangential geneigte Spanfläche (6a, 6b) angrenzt, welche zumindest eine konkave Ausnehmung (7) mit einer sich längs der Schneidkante (4a, 4b) erstreckenden Breite (B) und einer dazu senkrechten Länge (L) innerhalb der Spanfläche (6a, 6b), sowie einer zu dieser senkrechten Tiefe (T) aufweist, wobei ausgehend von der Schneidkante (4a, 4b) die Tiefe (T) linear zur Länge (L) zunimmt, **dadurch gekennzeichnet dass** die Schneidkante durchgehend geradlinig ist.

2. Bohrwerkzeug nach Anspruch 1, **dadurch gekennzeichnet, dass** ein Ausnehmungsspanwinkel ([beta]), der die mit einem Spanwinkel ([alpha]) tangential geneigte Spanfläche (6a, 6b) innerhalb der Ausnehmung (7) zusätzlich versteilert, im Bereich von 5° bis 15° liegt.

3. Bohrwerkzeug nach Anspruch 1 oder 2, **dadurch gekennzeichnet, dass** die Ausnehmung (7) in ihrer Breite (B) linear zur Länge (L) erweitert ist.

4. Bohrwerkzeug nach einem der Ansprüche 1 bis 3, **dadurch gekennzeichnet, dass** die Verbreiterung der Breite (B) zwischen der Hälfte und dem Doppelten der Länge (L) liegt.

5. Bohrwerkzeug nach einem der Ansprüche 1 bis 4, **dadurch gekennzeichnet, dass** an der ersten Spanfläche (6a) eine gerade Anzahl und an der zweiten Spanfläche (6b) eine ungerade Anzahl von Ausnehmungen (7) asymmetrisch radial ineinander versetzt angeordnet sind.

6. Bohrwerkzeug nach einem der Ansprüche 1 bis 5, **dadurch gekennzeichnet, dass** die Breitensumme der Breiten (B) aller Ausnehmungen (7) mindestens 40% des Hüllkreisdurchmessers (H) des Hartstoffeinsatzes (3) beträgt.

7. Bohrwerkzeug nach einem der Ansprüche 1 bis 6, **dadurch gekennzeichnet, dass** innerhalb der Ausnehmung (7) zumindest eine längs der Länge (L) verlaufende Verstärkungsrippe (8) vorhanden ist.

8. Bohrwerkzeug nach Anspruch 7, **dadurch gekennzeichnet, dass** die Verstärkungsrippe (8) linear zur Länge (L) höher wird.

9. Bohrwerkzeug nach Anspruch 7 oder 8, **dadurch gekennzeichnet, dass** ein Rippenerhöhungswinkel ([beta]) der Verstärkungsrippe (8) im Bereich von 2° bis 7° liegt.

10. Bohrwerkzeug nach einem der Ansprüche 7 bis 9, **dadurch gekennzeichnet, dass** die Verstärkungsrippe (8) viereckig ist.

## Claims

1. Drill tool (1) which is drivable at least partially rotatingly about a rotation axis (A) and has a helical shaft (2), to the axial shaft end of which a hard material insert (3) is fusion bonded, said insert having at least one radially extending cutting edge (4a, 4b) which adjoins at least one tangentially inclined cutting face (6a, 6b) which has at least one concave recess (7) which has a width (B) extending along the cutting edge (4a, 4b) and a length (L) perpendicular thereto within the cutting face (6a, 6b) and a depth (T) perpendicular to said length, wherein, proceeding from the cutting edge (4a, 4b), the depth (T) increases linearly in relation to the length (L), **characterised in that** the cutting edge is straight throughout.

2. Drill tool according to claim 1, **characterised in that** a recess cutting angle ([beta]) which within the recess (7) additionally steepens the cutting face (6a, 6b) which is tangentially inclined at a cutting angle ([alpha]) lies in the region of 5° to 15°.

3. Drill tool according to claim 1 or 2, **characterised in that** the recess (7) increases in the width (B) thereof linearly in relation to the length (L).

4. Drill tool according to one of the claims 1 to 3, **characterised in that** the increase of the width (B) lies between half and double the length (L).

5. Drill tool according to one of the claims 1 to 4, **characterised in that**, at the first cutting face (6a), an even number and, at the second cutting face (6b), an odd number of recesses (7) is arranged asymmetrically offset radially within one another.

6. Drill tool according to one of the claims 1 to 5, **characterised in that** the sum of the widths (B) of all the recesses (7) amounts to at least 40% of the envelope circle diameter (H) of the hard material insert (3).

7. Drill tool according to one of the claims 1 to 6, **characterised in that** within the recess (7), at least one reinforcing rib (8) extending along the length (L) is provided.

8. Drill tool according to claim 7, **characterised in that** the reinforcing rib (8) becomes higher linearly in relation to the length (L).

9. Drill tool according to claim 7 or 8, **characterised in that** a rib heightening angle ([beta]) of the reinforcing rib (8) lies in the range of 2° to 7°.

10. Drill tool according to one of the claims 7 to 9, **characterised in that** the reinforcing rib (8) is tetragonal.

## Revendications

1. Outil de perçage (1) pouvant être entraîné au moins en partie en rotation autour d'un axe de rotation (A), comprenant une tige (2) de forme hélicoïdale, à l'extrémité axiale est fixé un insert en matériau dur (3) par liaison de matière, qui présente au moins une arête tranchante (4a, 4b) s'étendant radialement, qui jouxte au moins une face de coupe (6a, 6b) inclinée tangentiellement, qui présente au moins un évidement (7) concave de largeur (B) s'étendant le long de l'arête tranchante (4a, 4b) et une longueur (L) perpendiculaire à la largeur à l'intérieur de la face de coupe (6a, 6b) ainsi qu'une profondeur (T) perpendiculaire à la longueur, sachant que la profondeur (T) augmente en partant de l'arête tranchante (4a, 4b) de manière linéaire par rapport à la longueur (L), **caractérisé en ce que** l'arête tranchante est rectiligne en continu.

2. Outil de perçage selon la revendication 1, **caractérisé en ce qu'**un angle de coupe d'évidement ([beta]), qui rend en outre plus raide la face de coupe (6a, 6b) inclinée de manière tangentielle selon un angle de coupe ([alpha]) dans l'évidement (7), est compris dans la plage allant de 5° à 15°.

3. Outil de perçage selon la revendication 1 ou 2, **caractérisé en ce que** l'évidement (7) est élargi dans sa largeur (B) de manière linéaire par rapport à la longueur (L).

4. Outil de perçage selon l'une quelconque des revendications 1 à 3, **caractérisé en ce que** l'élargissement de la largeur (B) est compris entre la moitié et le double de la longueur (L).

5. Outil de perçage selon l'une quelconque des revendications 1 à 4, **caractérisé en ce que** sont disposés de manière décalée radialement en asymétrie respectivement un nombre pair d'évidements (7) au niveau de la première face de coupe (6a) et un nombre impair d'évidements au niveau de la deuxième face de coupe (6b).

6. Outil de perçage selon l'une quelconque des revendications 1 à 5, **caractérisé en ce que** la somme des largeurs (B) de tous les évidements (7) présente une valeur d'au moins 40 % du diamètre du cercle inscrit (H) de l'insert en matériau dur (3).

7. Outil de perçage selon l'une quelconque des revendications 1 à 6, **caractérisé en ce qu'**au moins une nervure de renforcement (8) s'étendant le long de la longueur (L) est présente à l'intérieur de l'évidement (7).

8. Outil de perçage selon la revendication 7, **caractérisé en ce que** la nervure de renforcement (8) est plus haute de manière linéaire par rapport à la longueur (L).

9. Outil de perçage selon la revendication 7 ou 8, **caractérisé en ce qu'**un angle d'élévation de nervure ([beta]) de la nervure de renforcement (8) est compris dans la plage allant de 2° à 7°.

10. Outil de perçage selon l'une quelconque des revendications 7 à 9, **caractérisé en ce que** la nervure de renforcement (8) est quadrangulaire.
